# EUROPÄISCHE PATENTANMELDUNG

(11) **EP 4 180 286 A1**
(43) Veröffentlichungstag der Anmeldung: **17.05.2023**
(21) Anmeldenummer: 22206269.7
(22) Anmeldetag: 09.11.2022
(51) Int. Cl.: B60T 8/17, B60T 8/172, B60T 8/32

(54) **STEUERVORRICHTUNG FÜR EIN ANHÄNGERBREMSSYSTEM EINES ANHÄNGERS OHNE RADDREHZAHLSENSOREN**

(30) Priorität: 10.11.2021 DE 102021129182
(71) Anmelder: ZF CV Systems Global GmbH, 3006 Bern (CH)
(72) Erfinder: RODENBERG, Alexander, 38102 Braunschweig (DE); SCHOWE, Christoph, 30989 Gehrden (DE)
(74) Vertreter: Ohlendorf, Henrike

(57) **Zusammenfassung**

Die Erfindung betrifft eine Steuervorrichtung (1) für ein Anhängerbremssystem (48) eines Anhängers (36) mit einem Gehäuse (2), wobei in dem Gehäuse (2) ein Beschleunigungssensor (4) zum Ermitteln einer Beschleunigung wenigstens in einer ersten Richtungsachse des Anhängers (36) und ein Controller (6) angeordnet sind. Der Beschleunigungssensor (4) stellt ein Beschleunigungssignal (SB) an dem Controller (6) bereit. Der Controller (6) weist einen Prozessor (8) auf, der dazu ausgebildet ist, einen Stillstand des Anhängers (36) basierend auf wenigstens dem Beschleunigungssignal (SB) der ersten Richtungsachse des Anhängers (36) zu erkennen. Die Erfindung betrifft ferner ein Verfahren (100), ein Anhängerbremssystem (48) und einen Anhänger (36).

## Beschreibung

Die Erfindung betrifft eine Steuervorrichtung für ein Anhängerbremssystem eines Anhängers, welches zur Stillstanderkennung des Anhängers ausgebildet ist.

Nutzfahrzeuge mit pneumatischen Bremsen weisen seit einigen Jahren häufig ein elektronisches Bremssystem (EBS) auf. Diese Bremssysteme arbeiten mit elektronischen Signalen, über die das System gesteuert werden kann. Im Stand der Technik werden dem elektronischen Bremssystem über Drehzahlsensoren aktuelle Informationen über die Radgeschwindigkeit bereitgestellt. Das EBS kann dann anhand von Referenzwerten die aktuelle Fahrzeuggeschwindigkeit bzw. einen Stillstand des Fahrzeugs erkennen.

Die Stillstanderkennung eines Fahrzeugs mit EBS ist unter anderem daher relevant, da im Stillstand die Bremsdruckverteilung sowie die Bremsdrucksensoren geprüft werden können. Ebenfalls im Fahrzeugstillstand kann von einer elektropneumatischen auf eine pneumatische Druckaussteuerung umgeschaltet werden, um unnötigen Stromverbrauch zu vermeiden und die Lebensdauer der Ventile zu erhöhen. Die Stillstanderkennung ist daher relevanter Bestandteil eines EBS.

Wenn innerhalb einer bestimmten Zeit nach Einschalten des Fahrzeugs und damit des elektronischen Bremssystems keine Signale von den Raddrehzahlsensoren geliefert werden, erkennt das System einen Fehler und gibt eine Fehlermeldung aus. Es muss jedoch nicht in jedem Fall ein Fehler vorliegen. So können durchaus längere Stillstandzeiten mit eingeschaltetem elektronischem Bremssystem bspw. bei Werkstattaufenthalten vorkommen. Ebenfalls kann es sein, dass Raddrehzahlsensoren aufgrund angehobener Liftachsen bei Fahrt korrekterweise keine Signale ausgeben. Im Stand der Technik sind daher Verfahren bekannt, die Signale von Raddrehzahlsensoren verifizieren, um Fehlermeldungen zu vermeiden.

Ein solches Verfahren ist beispielsweise aus EP 3 041 718 B1 bekannt. Das Dokument schlägt vor, Signale von Sensoren, die nicht Raddrehzahlsensoren sind, zu verarbeiten, um Signale der Raddrehzahlsensoren oder daraus abgeleitete Fehlermeldungen zu verifizieren. Für die Erkennung von Fahrt und/oder Stillstand werden daher zumindest Signale eines oder mehrerer Sensoren verarbeitet, die nicht Radrehzahlsensoren sind. Als mögliche Sensoren werden Beladungssensoren, Beschleunigungssensoren und Bremsdrucksensoren benannt. Vor der Erkennung von Fahrt und/oder Stillstand mittels Sensoren, die keine Raddrehzahlsensoren sind, werden jedoch gemäß dem dort offenbarten Verfahren stets Raddrehzahlsensoren verarbeitet. Dies setzt voraus, dass die entsprechenden Fahrzeuge Raddrehzahlsensoren aufweisen.

Es gibt jedoch Fahrzeuge, die standardmäßig nicht mit Drehzahlsensoren ausgestattet sind, und bei denen es aus diesem Grund bislang nicht möglich ist, elektronische Bremssysteme einzusetzen. Dies trifft insbesondere für Agraranhänger zu. Um bei diesen Fahrzeugen ebenfalls elektronische Bremssysteme einsetzen zu können, müssen dem elektronischen Bremssystem anderweitig Informationen bereitgestellt werden, mittels derer die aktuelle Geschwindigkeit bzw. ein Stillstand des Fahrzeugs erkannt werden kann.

Aufgabe der vorliegenden Erfindung ist es somit, Fahrzeugen, die standardmäßig keine Drehzahlsensoren aufweisen, eine Ausstattung mit einem elektronischen Bremssystem zu ermöglichen.

Die Steuervorrichtung der eingangs genannten Art löst diese Aufgabe durch eine Steuervorrichtung mit einem Gehäuse, wobei in dem Gehäuse ein Beschleunigungssensor und ein Controller mit einem Prozessor angeordnet sind. Der Prozessor kann einen Stillstand des Anhängers basierend auf einem ihm vom Beschleunigungssensor bereitgestellten Beschleunigungssignal einer Beschleunigung wenigstens in einer ersten Richtungsachse des Anhängers erkennen. Ein vorheriges Verarbeiten von Raddrehzahlsensoren wird nicht vorausgesetzt.

Die Erfindung macht sich die Erkenntnis zunutze, dass eine Steuervorrichtung, die gemäß der Erfindung ausgebildet ist, für ein elektronisches Anhängerbremssystem nicht auf Signale von Raddrehzahlsensoren angewiesen ist, um einen Stillstand des Anhängers zu erkennen. Ein Vorhandensein von Drehzahlsensoren muss daher nicht mehr gegeben sein, um ein elektronisches Bremssystem in einem Fahrzeug einzusetzen. Dies ermöglicht es, Fahrzeuge, insbesondere Agraranhänger, ohne Drehzahlsensoren mit einem elektronischen Bremssystem auszustatten.

Die Steuervorrichtung umfasst ein Gehäuse, in welchem ein Beschleunigungssensor zum Ermitteln einer Beschleunigung wenigstens in einer ersten Richtungsachse des Anhängers und ein Controller mit einem Prozessor angeordnet sind. Der Beschleunigungssensor stellt ein Beschleunigungssignal an dem Controller bereit und der Prozessor des Controllers erkennt bzw. ermittelt basierend auf wenigstens dem Beschleunigungssignal der ersten Richtungsachse des Anhängers den Stillstand des Anhängers.

In einer Ausführungsform ist der Prozessor dazu ausgebildet, das Beschleunigungssignal als Amplitudensignal zu verarbeiten. Ferner kann der Prozessor dazu ausgebildet sein, das Beschleunigungssignal als Frequenzspektrum mittels einer Fast-Fourier-Transformation (FFT) zu verarbeiten. Das Beschleunigungssignal kann infolgedessen als auf die Erdbeschleunigung bezogener Beschleunigungsgradient mit der Einheit 1/s analysiert werden. Auf beispielhafte Verläufe bezogener Beschleunigungsgradienten unterschiedlicher Richtungsachsen wird in der Figurenbeschreibung ausführlicher eingegangen.

Für den Fall, dass das Beschleunigungssignal einen für einen Stillstand kennzeichnenden Schwellenwert unterschreitet, kann der Prozessor den Stillstand des Anhängers erkennen. Typische Beschleunigungssignale bei Fahrt und Stillstand des Anhängers sind bekannt oder können ermittelt werden. Der Schwellenwert kann folglich so bestimmt sein, dass der Prozessor den Stillstand des Anhängers zuverlässig erkennt.

In einer weiteren Ausführungsform weist der Controller eine Platine auf. Auf dieser Platine kann zudem der Beschleunigungssensor angeordnet sein. An die Platine können ferner ein oder mehrere Speicher angebunden werden, die ebenfalls Bestandteile des Controllers sein können. Mögliche Speicher sind Arbeitsspeicher oder Festspeicher, auf welche der Prozessor zum Zwecke von Lesen und/oder Schreiben von Daten zugreifen kann. Die Platine kann ferner einen Übertragungsweg bereitstellen, der eine Signalübertragung zwischen Beschleunigungssensor und Controller ermöglicht.

Ein Gehäuseabschnitt des Gehäuses der Steuervorrichtung kann dazu ausgebildet sein, an einem Rahmenabschnitt eines Rahmens des Anhängers kraft- und/oder formschlüssig befestigt zu werden. Dies ermöglicht es, die Beschleunigung wenigstens in der ersten Richtungsachse des Rahmens und damit des Anhängers mit dem Beschleunigungssensor zu erfassen.

Der Beschleunigungssensor ist in einer weiteren Ausführungsform dazu ausgebildet, die Beschleunigung in einer zweiten und/oder in einer dritten Richtungsachse des Anhängers zu ermitteln. Die zweite und die dritte Richtungsachse stehen jeweils auf der ersten Richtungsachse und aufeinander orthogonal. Die Richtungsachsen entsprechen der x-Achse, der y-Achse und der z-Achse im Fahrzeugkoordinatensystem des Anhängers und spannen ein dreidimensionales kartesisches Koordinatensystem auf. Schlussfolgernd kann der Beschleunigungssensor in Form eines dreiachsigen Beschleunigungssensors die Beschleunigung in x-Richtung des Anhängers, insbesondere die Längsbeschleunigung, die Beschleunigung in y-Richtung des Anhängers, also insbesondere die Querbeschleunigung, und die Beschleunigung in z-Richtung, also insbesondere die Vertikalbeschleunigung des Anhängers, erfassen. Es ist jedoch auch möglich, dass der Beschleunigungssensor ein einachsiger Beschleunigungssensor zum Erfassen lediglich der ersten Richtungsachse oder ein zweiachsiger Beschleunigungssensor zum Erfassen der ersten und der zweiten Richtungsachse des Anhängers ist.

Die erste Richtungsachse kann dabei sowohl die x-Achse, die y-Achse oder die z-Achse sein. Die zweite Richtungsachse entspricht dann einer der beiden Achsen, die nicht der ersten Richtungsachse entsprechen, und die dritte Richtungsachse entspricht folglich der Achse im Fahrzeugkoordinatensystem, die weder der ersten noch der zweiten Richtungsachse entspricht.

Ein Fahrzeugstillstand kann demnach basierend wenigstens auf dem Beschleunigungssignal der Längsbeschleunigung, der Querbeschleunigung oder der Vertikalbeschleunigung erkannt werden. Es ist jedoch auch möglich, dass der Prozessor einen Stillstand des Anhängers basierend auf dem Beschleunigungssignal der ersten, der zweiten und/oder der dritten Richtungsachse erkennt. Hierfür verarbeitet der Prozessor die ihm mittels des Beschleunigungssensors bereitgestellten Beschleunigungssignale der Beschleunigung in der zweiten und/oder dritten Richtungsachse entsprechend dem Beschleunigungssignal der Beschleunigung in der ersten Richtungsachse des Anhängers. Der Prozessor kann dann basierend auf den verarbeiteten Beschleunigungssignalen jeweils ermitteln, ob sich der Anhänger im Stillstand befindet. Dies ermöglicht zudem, die Stillstanderkennung basierend auf dem Beschleunigungssignal der ersten Richtungsachse mittels dem Beschleunigungssignal der Beschleunigung in der zweiten und/oder dritten Richtungsachse zu verifizieren, und ferner zu überprüfen, ob der Beschleunigungssensor in den jeweiligen Richtungsachsen funktionsfähig ist.

Ferner kann der Controller dazu ausgebildet sein, eines oder mehrere Fahrzeugsignale von einem oder mehreren weiteren Fahrzeugsensoren, mittels derer ein Stillstand des Anhängers erkennbar ist, zu empfangen. Mögliche Fahrzeugsensoren können Positionssensoren, Drehzahlsensoren oder Geschwindigkeitssensoren sein. Dies können Sensoren sein, mit denen das entsprechende Fahrzeug bereits ausgestattet ist.

Der Controller, insbesondere der Prozessor, kann in einer bevorzugten Ausführungsform die empfangenen Fahrzeugsignale verarbeiten und dann das Beschleunigungssignal basierend auf den Fahrzeugsignalen verifizieren. Hierfür wertet der Prozessor das Fahrzeugsignal aus und erkennt bei Unterschreiten eines für das entsprechende Fahrzeugsignal vorbestimmten Schwellenwerts den Stillstand des Anhängers. Nachdem der Prozessor sowohl das Beschleunigungssignal als auch das Fahrzeugsignal verarbeitet hat, kann der Prozessor ermitteln, ob sowohl basierend auf dem Beschleunigungssignal als auch basierend auf dem Fahrzeugsignal im gleichen Zeitbereich ein Stillstand des Anhängers erkannt wurde. Für den Fall, dass basierend auf dem Beschleunigungssignal und dem Fahrzeugsignal übereinstimmend ein Stillstand des Anhängers erkannt wurde, verifiziert der Controller den Stilstand des Anhängers. Für den Fall, dass die Stillstanderkennung basierend auf dem Beschleunigungssignal und dem Fahrzeugsignal nicht übereinstimmt, kann der Controller eine Fehlermeldung, beispielsweise durch Einschalten einer Warnleuchte, ausgeben. Es kann auch vorgesehen sein, dass nach Ablauf einer vorbestimmten Zeit, eine erneute Verifizierung durchgeführt wird.

Der Prozessor weist in einer Weiterbildung eine Lerneinheit auf. Diese Lerneinheit ist vorzugsweise dazu ausgebildet, einen Filter für eine Rauschunterdrückung im Beschleunigungssignal zu trainieren. Hierfür kann die Lerneinheit auf die vom Beschleunigungssensor bereitgestellten Beschleunigungssignale zugreifen und Gesetzmäßigkeiten für eine möglichst genaue Voraussage von Rauschsignalfrequenzanteilen im Beschleunigungssignal festlegen. Auf je mehr Beschleunigungssignale die Lerneinheit zugreifen kann, desto zielgenauer können die Gesetzmäßigkeiten Rauschsignalfrequenzanteile im Beschleunigungssignal voraussagen. Die Lerneinheit passt den Filter für die Rauschunterdrückung im Beschleunigungssignal basierend auf den Gesetzmäßigkeiten an und verbessert den Filter dahingehend, dass Rauschsignalfrequenzanteile zielgenauer unterdrückt werden. Vorzugsweise werden diese Schritte im Stillstand durchgeführt, da dann keine Beschleunigung auf den Beschleunigungssensor einwirkt und so das Rauschen bestmöglich ermittelt werden kann.

Der Controller kann dazu ausgebildet sein, ein Fahrzeugstillstandsignal an einer Bremsdrucksensorsteueruntereinheit bereitzustellen, nachdem der Controller einen Stillstand des Anhängers erkannt hat. Die Bremsdrucksensorsteueruntereinheit kann dann einen oder mehrere Bremsdrucksensoren des Anhängers auswerten. Da im Fahrzeugstillstand nach dem Stand der Technik ferner die Bremsdruckverteilung des Fahrzeugs geprüft wird sowie von einer elektropneumatischen auf eine pneumatische Druckaussteuerung umgeschaltet werden kann, ist der Controller in einer Weiterbildung dazu ausgebildet, das Fahrzeugstillstandsignal an weitere Untersteuereinheiten bereitzustellen, die ein Steuersignal zum Prüfen der Bremsdruckverteilung oder zum Umschalten von einer elektropneumatischen auf eine pneumatische Druckaussteuerung aussteuern können.

Darüber hinaus ist der Controller dazu ausgebildet, das Fahrzeugstillstandsignal an einem Anschluss für ein Bussystem bereitzustellen. Der Anschluss kann ein 7-poliger Anhängerstecker gemäß ISO 7638 sein. Auf diese Weise kann die Steuervorrichtung des Anhängerbremssystems die Information über einen Stillstand des Anhängers mit weiteren Teilnehmern eines entsprechenden Buskommunikationsnetzwerks teilen. Ein möglicher Teilnehmer des Buskommunikationsnetzwerks kann beispielsweise eine Steuereinheit eines Zugfahrzeugs oder eines weiteren Anhängers sein.

Ferner kann der Controller in einer Weiterbildung ein drahtloses Fahrzeugstillstandsignal für die Anwendung von Telematikfunktionen bereitstellen, nachdem der Controller den Stillstand des Anhängers erkannt hat.

Eine Telematik kann dann bspw. Stillstandberichte des Anhängers anfertigen oder eine Wegfahrsperre aktivieren. Es ist jedoch auch möglich, dass eine Schnittstelle für ein Telematiksystem über das Bussystem realisiert wird.

Gegenstand der Erfindung ist ferner ein Verfahren zum Ermitteln eines Stillstands des Anhängers mit der zuvor beschriebenen Steuervorrichtung. Das Verfahren beginnt mit dem Ermitteln einer Beschleunigung wenigstens in einer ersten Richtungsachse des Anhängers mittels des Beschleunigungssensors. Der Beschleunigungssensor stellt dann ein Beschleunigungssignal, das die Beschleunigung der wenigstens ersten Richtungsachse des Anhängers wiedergibt, an den Controller bereit. Nachdem der Controller das Beschleunigungssignal empfangen hat, verarbeitet der Prozessor des Controllers das Signal als Amplitudensignal. Er kann das Signal zudem oder alternativ als Frequenzspektrum über eine Fast-Fourier-Transformation verarbeiten. Diese Verarbeitung ermöglicht es dem Prozessor, das Beschleunigungssignal als bezogenen Beschleunigungsgradienten auszuwerten. Für den Fall, dass das dem Prozessor bereitgestellte Beschleunigungssignal einen für einen Stillstand kennzeichnenden Schwellenwert unterschreitet, erkennt der Prozessor einen Stillstand des Anhängers.

Ein weiterer optionaler Schritt des Verfahrens ist es, das Beschleunigungssignal basierend auf einem oder mehreren Fahrzeugsignalen eines oder mehrerer weiterer Fahrzeugsensoren, mittels derer ein Stillstand des Anhängers erkennbar ist, zu verifizieren. Hierfür werden die Fahrzeugsignale dem Controller bereitgestellt und der Prozessor verarbeitet diese anschließend. Auch die Fahrzeugsignale können vom Prozessor als Amplitudensignal und/oder als Frequenzspektrum mittels FFT verarbeitet werden. Der Prozessor erkennt bei Unterschreiten eines für das entsprechende Fahrzeugsignal vorbestimmten Schwellenwerts den Stillstand des Fahrzeugs. Der Prozessor vergleicht das Beschleunigungssignal mit dem Fahrzeugsignal, indem der Prozessor ermittelt, ob für beide Signale im gleichen Zeitbereich ein Stillstand des Anhängers erkannt wurde. Für den Fall, dass der Prozessor sowohl basierend auf dem Beschleunigungssignal als auch basierend auf dem Fahrzeugsignal im gleichen Zeitbereich einen Stillstand des Anhängers erkennt, verifiziert der Controller den Stillstand des Anhängers.

Das Verfahren weist optional ferner einen Schritt zum Trainieren und Anpassen eines Filters für die Rauschunterdrückung auf. Für diesen Schritt sieht die Steuervorrichtung eine Lerneinheit im Prozessor vor. Die Lerneinheit greift auf die vom Beschleunigungssignal bereitgestellten Beschleunigungssignale zu, die für die Lerneinheit Lerndaten bilden. Basierend auf diesen Lerndaten kann die Lerneinheit dann Gesetzmäßigkeiten festlegen, die möglichst genau Rauschsignalfrequenzanteile im Beschleunigungssignal vorhersagen. Je mehr Lerndaten der Lerneinheit zur Verfügung stehen, desto präziser kann die Lerneinheit Rauschsignalfrequenzanteile im Beschleunigungssignal voraussagen. Die Lerneinheit trainiert mit diesem Wissen den Filter zur Rauschunterdrückung, sodass der Filter zielgenau Rauschsignale unterdrückt.

In einem weiteren optionalen Schritt des Verfahrens stellt der Controller das Fahrzeugstillstandsignal an eine Bremsdrucksensorsteueruntereinheit bereit. Die Bremsdrucksensorsteueruntereinheit erhält somit die Information, dass sich der Anhänger im Stillstand befindet. Die Bremsdrucksensorsteueruntereinheit kann dann, nach Erhalt dieser Information, einen oder mehrere Bremsdrucksensoren des Anhängers auswerten.

In einem weiteren optionalen Schritt des Verfahrens stellt der Controller ferner ein drahtloses Fahrzeugstillstandsignal für die Anwendung von Telematikfunktionen bereit.

Die vorliegende Erfindung betrifft zudem ein Anhängerbremssystem, insbesondere ein elektronisch steuerbares pneumatisches Anhängerbremssystem, mit der bereits beschriebenen Steuervorrichtung. Darüber hinaus weist das Anhängerbremssystem wenigstens einen Anhängermodulator mit einer eigenen Anhängermodulator-Steuereinheit zum Aussteuern von Bremsdrücken entsprechend der Vorgaben der Steuervorrichtung, einen oder mehrere Bremszylinder, die vom Anhängermodulator ansteuerbar sind, sowie einen oder mehrere Bremsdrucksensoren, die von der Bremsdrucksensorsteueruntereinheit mittels des Anhängermodulators auswertbar sind, auf. Es ist auch möglich, dass der Anhänger zwei Anhängermodulatoren aufweist. Zudem weist das Anhängerbremssystem den Anschluss für das Bussystem auf. Das Anhängerbremssystem ist zum Ausführen des oben beschriebenen Verfahrens ausgebildet.

Ferner ist ein Anhänger, insbesondere ein Agraranhänger, Bestandteil der Erfindung. Der Anhänger weist das zuvor beschriebene Anhängerbremssystem, einen Rahmen, eine Kupplungsmöglichkeit, wenigstens eine Achse und wenigstens zwei Räder auf. Über die Kupplungsmöglichkeit, wie beispielsweise einen Königszapfen, kann der Anhänger mit einem Zugfahrzeug verbunden werden. Der Rahmen des Anhängers besteht üblicherweise aus Längsträgern und Querträgern, die miteinander verbunden sind. Der Anhänger verfügt beispielsweise über zwei Achsen, wobei eine erste Achse eine Anhängervorderachse und eine zweite Achse eine Anhängerhinterachse bildet. Es ist jedoch auch möglich, dass der Anhänger eine Achse, drei Achsen oder sogar mehr als drei Achsen aufweist. Die Achsen sind mit dem Rahmen verbunden. Zwei Räder sind beispielsweise an zwei sich gegenüberliegenden Endabschnitten einer Achse angeordnet. Eine Achse verfügt somit insbesondere über zwei sich gegenüberliegende Räder. Weist der Anhänger zwei Achsen auf, verfügt der Anhänger folglich über vier Räder.

Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Zeichnungen sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, den Zeichnungen und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
Fig. 1 eine schematische Darstellung eines Anhängers mit einer Steuervorrichtung für ein Anhängerbremssystem gemäß einem ersten Ausführungsbeispiel;
Fig. 2 einen Verlauf einer beispielhaften Vertikalbeschleunigung des Anhängers;
Fig. 3 einen Verlauf einer beispielhaften Querbeschleunigung des Anhängers;
Fig. 4 einen Verlauf einer beispielhaften Längsbeschleunigung des Anhängers;
Fig. 5 ein schematisches Ablaufdiagramm für ein erstes bevorzugtes Ausführungsbeispiel des Verfahrens;
Fig. 6 ein schematisches Ablaufdiagramm für ein zweites bevorzugtes Ausführungsbeispiel des Verfahrens, das eine mögliche Weiterbildung des ersten Ausführungsbeispiels des Verfahrens ist;
Fig. 7 ein schematisches Ablaufdiagramm für ein drittes bevorzugtes Ausführungsbeispiel des Verfahrens, das eine weitere mögliche Weiterbildung des ersten Ausführungsbeispiels des Verfahrens ist;
Fig. 8 ein schematisches Ablaufdiagramm für ein viertes bevorzugtes Ausführungsbeispiel des Verfahrens, das eine Weiterbildung des zweiten bevorzugten Ausführungsbeispiels des Verfahrens ist; und in
Fig. 9 ein schematisches Ablaufdiagramm für ein fünftes bevorzugtes Ausführungsbeispiel des Verfahrens, das eine Weiterbildung des vierten bevorzugten Ausführungsbeispiels des Verfahrens ist.

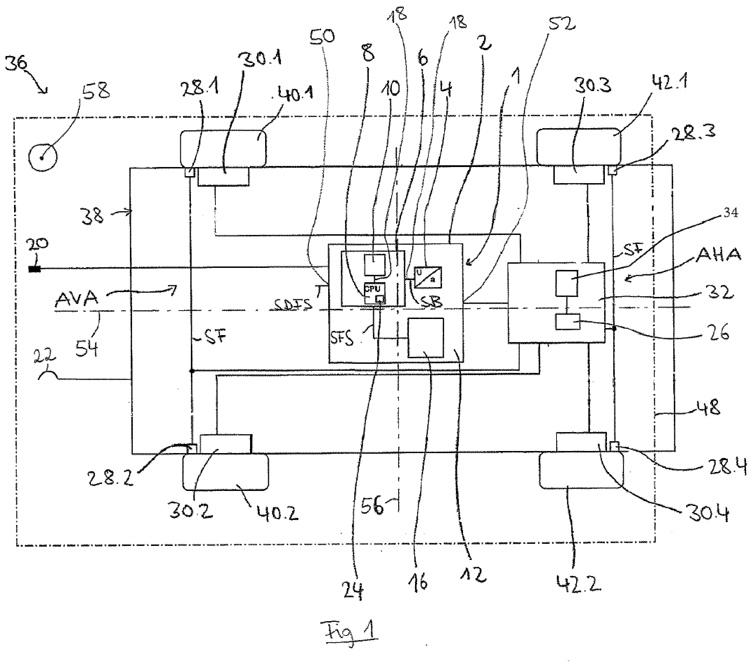

Fig. 1 zeigt einen Anhänger 36 mit einer Anhängervorderachse AVA und einer Anhängerhinterachse AHA. Der Anhänger 36 weist gemäß dem Ausführungsbeispiel je zwei Vorderräder 40.1-40.2 und je zwei Hinterräder 42.1-42.2 auf. Die Vorderräder 40.1-40.2 sind an zwei sich gegenüberliegenden Achsendabschnitten der Anhängervorderachse AVA angeordnet. Die Hinterräder 42.1-42.2 sind an zwei sich gegenüberliegenden Achsendabschnitten der Anhängerhinterachse AHA angeordnet. Den Vorderrädern 40.1-40.2 und den Hinterrädern 42.1-42.2 benachbart sind Radbremsen mit jeweils einem Bremszylinder 30.1-30.4 und ein Fahrzeugsensor 28.1-28.4 angeordnet. Die Fahrzeugsensoren 28.1-28.4 sind vorzugsweise dergestalt, dass mittels ihnen ein Stillstand des Anhängers 36 erkennbar ist. Mögliche Fahrzeugsensoren sind beispielsweise Positionssensoren, Drehzahlsensoren oder Geschwindigkeitssensoren. In dem Ausführungsbeispiel ist zudem schematisch ein Rahmen 38 des Anhängers 36 gezeigt. Vorzugsweise umfasst der Rahmen 38 mehrere Quer- und Längsbalken, sodass der gesamte Anhänger 36 gestützt ist. Der Rahmen 38 ist ferner mit der Anhängervorderachse AVA und der Anhängerhinterachse AHA verbunden oder verbindbar.

Der Anhänger 36 weist eine x-Achse 54, welche beispielsweise der Längsachse des Anhängers entspricht, eine y-Achse 56, welche beispielsweise der Querachse des Anhängers entspricht, und eine z-Achse 58, die beispielsweise der Vertikalachse des Anhängers entspricht, auf. Die x-Achse 54, die y-Achse 56 und die z-Achse 58 spannen ein dreidimensionales Koordinatensystem auf. Die Richtung der x-Achse 54 weist insbesondere in die gleiche Richtung wie die Fahrtrichtung. Die Richtung der z-Achse 58 zeigt gemäß Fig. 1 in Richtung des Betrachters.

Der Anhänger 36 weist eine Steuervorrichtung 1 für ein pneumatisches Anhängerbremssystem 48 auf. Die Steuervorrichtung 1 weist ein Gehäuse 2 auf. Ein Gehäuseabschnitt des Gehäuses 2 ist an einem Rahmenabschnitt des Rahmens 38 kraft- und/oder formschlüssig befestigt. Innerhalb des Gehäuses 2 sind ein Beschleunigungssensor 4 und ein Controller 6 angeordnet. Der Beschleunigungssensor 4 und der Controller 6 stehen mittels eines Übertragungswegs 18 so in Verbindung, dass der Beschleunigungssensor 4 ein Beschleunigungssignal SB an einen Prozessor 8 bereitstellen kann.

Der Controller 6 weist den Prozessor 8 sowie einen Speicher 10 auf. Der Prozessor 8 ist in der Lage, auf Speicherdaten des Speichers 10 zuzugreifen. Auch hierfür steht ein Übertragungsweg 18 zur Verfügung. Möglich sind auch ein weiterer oder mehrere weitere Speicher, auf die der Prozessor 8 ebenfalls zugreifen kann.

Der Controller 6 samt Prozessor 8 und Speicher 10 sowie der Beschleunigungssensor 4 sind auf einer gemeinsamen Platine 12 angeordnet. Auf dieser Platine 12 befindet sich ferner eine Bremsdrucksensorsteueruntereinheit 16. Der Controller 6 steht mit der Bremsdrucksensorsteueruntereinheit 16 in Verbindung zum Bereitstellen eines Fahrzeugstillstandsignals SFS an die Bremsdrucksensorsteueruntereinheit 16.

Die Steuervorrichtung 1 ist mit einem Anschluss 20 für ein Bussystem (nicht abgebildet) verbunden. Hierdurch können Informationen mit anderen Teilnehmern eines Buskommunikationsnetzwerks (nicht abgebildet) ausgetauscht werden. Ferner verfügt die Steuervorrichtung 1 über eine drahtlose Schnittstelle 50 zum Bereitstellen eines drahtlosen Fahrzeugstillstandsignal SDFS für die Anwendung von Telematikfunktionen.

Die Steuervorrichtung 1 verfügt über eine Anhängermodulatorschnittstelle 52 zu einem Anhängermodulator 32, der eine eigene Anhängermodulator-Steuereinheit 34 aufweist. Die Steuervorrichtung 1 und der Anhängermodulator 32, genauer gesagt die Anhängermodulator-Steuereinheit 34, können so Signaldaten austauschen. Die Steuervorrichtung 1 kann ferner Vorgaben an den Anhängermodulator 32 zum Steuern und insbesondere Prüfen des Bremssystems 48 stellen. Der Anhängermodulator 32 verfügt zu diesem Zweck insbesondere über Schnittstellen zu weiteren Einheiten des Anhängerbremssystems 48. Weiterhin stellt die Steuervorrichtung 1 Schaltsignale und/oder Bremsanforderungssignale an den Anhängerbremsmodulator 32 zur Verfügung, der dann entsprechend Bremsdrücke an Bremszylinder 30.1-30.4 in bekannter Weise ansteuert.

Der Anhängermodulator 32 weist Verbindungen zu den Bremszylindern 30.1-30.4 sowie zu den Fahrzeugsensoren 28.1-28.4 auf. Ferner weist der Anhängermodulator 32 wenigstens einen Bremsdrucksensor 26 auf, der den aktuellen Bremsdruck 64 erfasst. Der Anhängermodulator 32 kann so das Bremssystem 48 steuern und Fahrzeugsignale SF mit den einzelnen Einheiten des Anhängerbremssystems 48 austauschen.

Zudem weist der Anhänger 36 eine Kupplungsmöglichkeit 22 auf. Die Kupplungsmöglichkeit 22 ermöglicht ein Verkuppeln mit einem Zugfahrzeug (nicht abgebildet) oder einem weiteren Anhänger (ebenfalls nicht abgebildet).

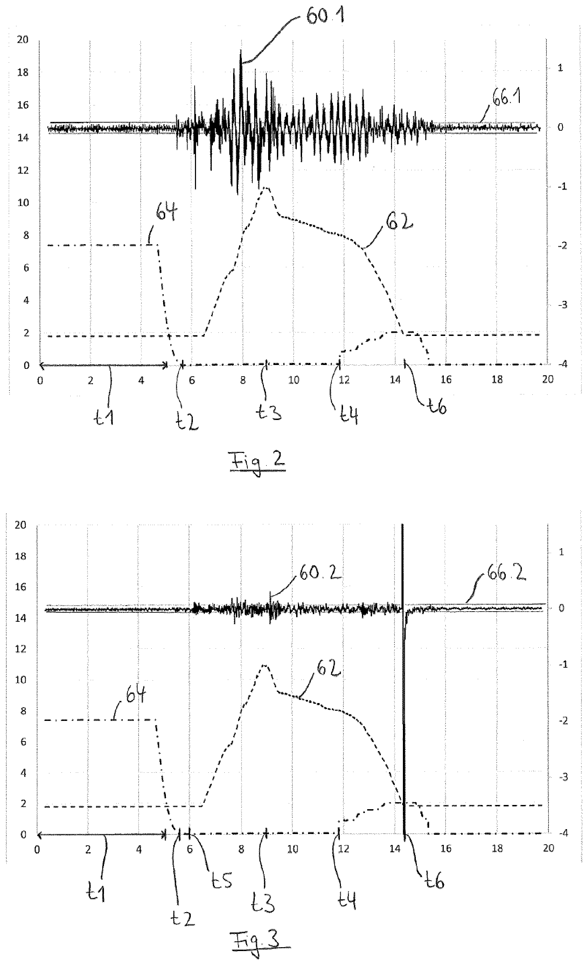

In Fig. 2 ist ein schematischer Verlauf einer beispielhaften, gemessenen Vertikalbeschleunigung eines Anhängers 36 zu sehen. Das Diagramm zeigt einen Verlauf eines bezogenen Beschleunigungsgradienten 60.1 einer Vertikalbeschleunigung, einen Verlauf eines Bremsdrucks 64 und einen Verlauf einer Radgeschwindigkeit 62 in einem bestimmten Zeitbereich. Hierbei ist die Radgeschwindigkeit 62 mit einer gestrichelten Linie, der Bremsdruck 64 mit einer Strich-Punkt-Linie und der Beschleunigungsgradient 60.1 mit einer durchgezogenen Linie abgebildet. Auf der Abszissenachse ist die Zeit für den Bereich 0 bis 20 Sekunden aufgetragen, auf der Ordinatenachse links ist der Bremsdruck 64 in bar sowie die Radgeschwindigkeit 62 in km/h in einem Bereich zwischen 0 und 20 aufgetragen und auf der Ordinatenachse rechts ist die auf die Erdbeschleunigung bezogene Beschleunigungsgradient 60.1 in der Einheit 1/s in einem Bereich zwischen -4 und +1 aufgetragen.

In einem Bereich t1 liegt der Bremsdruck 64 bei etwas über 7 bar. Für eine durch einen herkömmlichen Raddrehzahlsensor erfasste Radgeschwindigkeit 62 wird in dem Zeitbereich t1 eine Geschwindigkeit von unter 2 km/h angegeben. Aufgrund des induktiven Messverfahrens sind geringe Geschwindigkeiten nicht zuverlässig detektierbar. Im Folgenden werden daher Geschwindigkeiten unter 2 km/h als vernachlässigbar angesehen. Der bezogene Beschleunigungsgradient 60.1 der gemessenen Vertikalbeschleunigung des Anhängers 36 liegt in dem Zeitbereich t1 bei ca. 0 s⁻¹ und weist nur minimale Auslenkungen auf, die auf ein Grundrauschen des Signals zurückzuführen sind.

Der Anhänger 36 befindet sich in t1 in einem vollständig gebremsten Zustand. Ferner wird für t1 keine relevante Beschleunigung in vertikaler Richtung des Anhängers 36 mittels des Beschleunigungssensors 4 gemessen. Aus diesem Beschleunigungssignal SB kann daher geschlossen werden, dass der Anhänger 36 keine Beschleunigung in vertikaler Richtung erfährt und sich somit im Stillstand befindet.

Nach ca. 5 Sekunden wird der Bremsdruck 64 innerhalb kurzer Zeit abgebaut. Ab dem Zeitpunkt t2 liegt der Bremsdruck 64 dann bei 0 bar. Sobald der Bremsdruck 64 komplett abgebaut wurde und bei 0 bar liegt, erkennt der Beschleunigungssensor 4 eine Beschleunigung in vertikaler Richtung. Der in dem Diagramm abgebildete bezogene Beschleunigungsgradient 60.1 weist zunächst geringe Auslenkungen auf. Die erfasste Radgeschwindigkeit 62 liegt bis ca. 6,5 Sekunden unverändert im vernachlässigbarem Bereich, erst ab dann ändert sich der Verlauf der Radgeschwindigkeit 62. Die Radgeschwindigkeit 62 wird somit durch herkömmliche Radrehzahlsensoren zeitverzögert erfasst.

Die durch den Raddrehzahlsensor erfasste Radgeschwindigkeit 62 steigt bis zu einer Geschwindigkeit von 11 km/h innerhalb von 2,5 Sekunden an. Dies bedeutet, bei t3 liegt gemäß Verlauf der Radgeschwindigkeit 62 eine Maximalgeschwindigkeit von 11 km/h vor. Zu dem Zeitpunkt t3 liegt der Bremsdruck 64 nach wie vor bei 0 bar. Die Auslenkungen des Beschleunigungsgradienten 60.1 der Vertikalbeschleunigung steigen an. Die Maximalauslenkung des gesamten Verlaufs liegt dann im Bereich von 8 Sekunden zwischen einer bezogenen Beschleunigung von ca. -1,5 s⁻¹ und ca. +1,3 s⁻¹.

Ab t3 reduziert sich die Radgeschwindigkeit 62 innerhalb einer halben Sekunde von 11 km/h auf 9 km/h und dann ab Sekunde 9,5 bis zum Zeitpunkt t4 auf 8 km/h. Zwischen t3 und t4 erfasst der Beschleunigungssensor 4 nach wie vor eine Beschleunigung in vertikaler Richtung, die Auslenkungen lassen jedoch nach.

Zum Zeitpunkt t4 wird ein Bremsdruck 64 aufgebaut, der Anhänger 36 wird demnach abgebremst. Der Bremsdruck 64 wird dann stufenweise bis kurz vor dem Zeitpunkt t6 auf 2 bar aufgebaut. In dem Bereich zwischen t4 und t6 sinkt die gemessene Radgeschwindigkeit 62 wieder und gelangt kurz nach Erreichen eines Bremsdrucks 64 von 2 bar wieder in einen vernachlässigbaren Bereich. Der Beschleunigungsgradient 60.1 weist ab ca. Sekunde 13 Auslenkungen im Bereich zwischen +0,3 s⁻¹ und -0,3 s⁻¹ auf.

Der Bremsdruck 64 von 2 bar liegt bis ca. Sekunde 15 an, danach fällt der Bremsdruck 64 erneut auf 0 bar ab. Ab ca. Sekunde 15 liegt der bezogene Beschleunigungsgradient 60.1 der gemessenen Vertikalbeschleunigung des Anhängers wieder bei ca. 0 s⁻¹. Das Fahrzeug wurde demnach komplett abgebremst und befindet sich nun im Stillstand.

Ein möglicher, vorbestimmter Schwellenwert 66.1 für den Beschleunigungsgradienten 60.1 der Vertikalbeschleunigung, der kennzeichnend für einen Stillstand des Anhängers ist, ist in Fig. 2 eingezeichnet. Bei Unterschreiten des Schwellenwerts 66.1 für eine vorbestimmte Zeit und für den Fall, dass der Beschleunigungsgradient in dieser Zeit keine nennenswerten Auslenkungen mehr aufweist, ist von einem Stillstand des Anhängers 36 auszugehen. Die Abbildung verdeutlicht somit, dass ein Stillstand des Anhängers 36 basierend auf dem Beschleunigungssignal der Vertikalbeschleunigung erkennbar ist.

In Fig. 3 ist ein schematischer Verlauf einer beispielhaften, gemessenen Querbeschleunigung eines Anhängers abgebildet. Das Diagramm zeigt den Verlauf eines bezogenen Beschleunigungsgradienten 60.2 einer Querbeschleunigung, einen Verlauf eines Bremsdrucks 64 und einen Verlauf einer Radgeschwindigkeit 62 in einem bestimmten Zeitbereich. Die Radgeschwindigkeit 62 ist in Fig. 3 erneut mit einer gestrichelten Linie, der Bremsdruck 64 mit einer strichpunktierten Linie und der Beschleunigungsgradient 60.2 mit einer durchgezogenen Linie abgebildet. Die Zeit auf der Abszissenachse ist ebenfalls für den Bereich zwischen 0 bis 20 Sekunden aufgetragen. Auf der linken Seite der Ordinatenachse ist der Bremsdruck 64 in bar sowie die Radgeschwindigkeit 62 in km/h in einem Bereich zwischen 0 und 20 aufgetragen. Auf der rechten Seite der Ordinatenachse ist der auf die Erdbeschleunigung bezogene Beschleunigungsgradient 60.2 in der Einheit 1/s in einem Bereich zwischen -4 und +1 aufgetragen.

Um eine Vergleichbarkeit der Messsignale der Vertikalbeschleunigung, der Querbeschleunigung und der Längsbeschleunigung zu gewährleisten, wurde die Messerhebung in dem konkreten Ausführungsbeispiel identisch durchgeführt, sodass zu identischen Zeitpunkten im Bereich zwischen 0 und 20 Sekunden der Bremsdruck 64 auf- und abgebaut wurde. Somit bleiben der Verlauf des Bremsdrucks 64 und der Verlauf der Radgeschwindigkeit 62 für jede Messerhebung gleich. Daher wird für die genaue Beschreibung dieser Verläufe auf die Beschreibung der Fig. 2 verwiesen.

Der bezogene Beschleunigungsgradient 60.2 der gemessenen Querbeschleunigung des Anhängers 36 liegt bis zum Zeitpunkt t5 bei ca. 0 s⁻¹ und weist nur minimale Auslenkungen auf, die ebenfalls auf ein Rauschen zurückzuführen sind. Der Anhänger 36 erfährt demzufolge bis t5 keine Querbeschleunigung und befindet sich demzufolge im Stillstand.

Ab dem Zeitpunkt t5, also leicht zeitverzögert zu dem Beschleunigungsgradienten 60.1 der Vertikalbeschleunigung und dem Abfall des Bremsdrucks 64 auf 0 bar, weist der Beschleunigungsgradient 60.2 der Querbeschleunigung erkennbare Auslenkungen auf, die darauf hinweisen, dass der Anhänger 36 in Bewegung ist und sich nicht mehr im Stillstand befindet. Die Auslenkungen sind hierbei deutlich geringer als die Auslenkungen des Beschleunigungsgradienten 60.1 der Vertikalbeschleunigung. Sie liegen in einem Bereich zwischen +0,2 s⁻¹ und -0,2 s⁻¹ und verlaufen bis zum Zeitpunkt t6 relativ gleichmäßig.

Bei t6 weist der Beschleunigungsgradient 60.2 dann eine starke Auslenkung auf, die außerhalb des Bereichs zwischen -4 s⁻¹ und +1 s⁻¹ verläuft. Ebenfalls bei t6 gelangt die Radgeschwindigkeit 62 wieder in einen vernachlässigbaren Bereich. Kurz zuvor hat der Bremsdruck 64 2 bar erreicht. Mittels des Beschleunigungsgradienten 60.2 der Querbeschleunigung ist demnach sehr deutlich das komplette Abbremsen des Anhängers 36 zu erkennen. Nach dieser starken Auslenkung liegt der bezogene Beschleunigungsgradient 60.2 der gemessenen Querbeschleunigung dann wieder bei ca. 0 s⁻¹und weist lediglich minimale Auslenkungen auf. Diese Auslenkungen unterschreiten einen für den Beschleunigungsgradienten 60.2 der Querbeschleunigung vorbestimmten Schwellenwert 66.2, der kennzeichnend für einen Stillstand des Anhängers 36 ist. Der Beschleunigungssensor 4 erfährt somit keine Querbeschleunigung mehr und es ist erkennbar, dass sich der Anhänger 36 im Stillstand befindet.

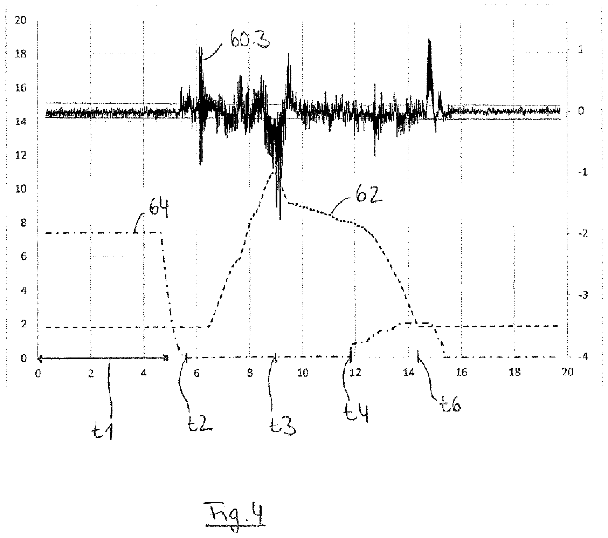

In Fig. 4 ist ein schematischer Verlauf einer beispielhaften, gemessenen Längsbeschleunigung eines Anhängers 36 zu sehen. Abgebildet sind der Verlauf eines bezogenen Beschleunigungsgradienten 60.3 einer Längsbeschleunigung, ein Verlauf eines Bremsdrucks 64 und ein Verlauf einer Radgeschwindigkeit 62 in einem bestimmten Zeitbereich. Der Zeitbereich ist erneut auf der Abszissenachse aufgetragen und liegt in einem Bereich zwischen 0 und 20 Sekunden. Die Radgeschwindigkeit 62 ist als gestrichelte Linie abgebildet, der Bremsdruck 64 als strichpunktierte Linie und der Beschleunigungsgradient 60.3 als durchgezogene Linie. Auf der linken Seite der Ordinatenachse ist der Bremsdruck 64 in bar sowie die Radgeschwindigkeit 62 in km/h in einem Bereich zwischen 0 und 20 aufgetragen. Auf der rechten Seite der Ordinatenachse ist der auf die Erdbeschleunigung bezogene Beschleunigungsgradient 60.3 in der Einheit 1/s in einem Bereich zwischen -4 und +1 aufgetragen.

Die Verläufe der Radgeschwindigkeit 62 sowie des Bremsdrucks 64 sind identisch zu den Verläufen der Radgeschwindigkeit 62 und des Bremsdrucks 64 der Fig. 2 und der Fig. 3. Es wird daher für diese Verläufe auf die Beschreibung der Fig. 2 verwiesen.

Der bezogene Beschleunigungsgradient 60.3 der gemessenen Längsbeschleunigung des Anhängers liegt bis kurz vor t2 bei ca. 0 s⁻¹ und weist nur minimale Auslenkungen auf, die auf ein Rauschen des Signals zurückzuführen sind. Der Anhänger 36 erfährt demzufolge bis kurz vor t2 keine Längsbeschleunigung und befindet sich im Stillstand.

Ab t2 liegt der Bremsdruck 64 bei 0 bar. Zeitgleich erkennt der Beschleunigungssensor 4 eine Beschleunigung in Längsrichtung und weist bis zu ca. Sekunde 6 weitestgehend eine positive Längsbeschleunigung aus. Kurz nach Sekunde 6 sind dann Auslenkungen des bezogenen Beschleunigungsgradienten 60.3 der Längsbeschleunigung in einem Bereich zwischen ca. -0,8 s⁻¹ und +1 s⁻¹ zu erkennen. Nachfolgend weist der in dem Diagramm abgebildete Beschleunigungsgradient 60.3 bis ca. Sekunde 8,8 weitestgehend abwechselnd Abschnitte positiver und negativer Längsbeschleunigung auf.

In dem Bereich der maximalen Radgeschwindigkeit 62 von 11 km/h, also im Bereich des Zeitpunkts t3, liegt der Beschleunigungsgradient 60.3 der Längsbeschleunigung dann deutlich im negativen Bereich. Hier wird eine auf die Erdbeschleunigung bezogenen Längsbeschleunigung von bis zu -1,8 s⁻¹ gemessen. Dem Abschnitt der negativen Beschleunigung folgt dann erneut ein Abschnitt positiver Längsbeschleunigung.

Ab ca. Sekunde 10 bis zum Zeitpunkt t6 misst der Beschleunigungssensor 4 keine nennenswerte positive oder negative Beschleunigung in Längsrichtung mehr. Der Beschleunigungsgradient 60.3 weist in dem Zeitbereich zwischen Sekunde 10 und t6 relativ gleichmäßige Auslenkungen im Bereich zwischen +0,4 s⁻¹ und -0,7 s⁻¹ auf.

In einem Zeitbereich, nachdem die von den herkömmlichen Raddrehzahlsensoren gemessene Radgeschwindigkeit 62 bei t6 wieder in einen vernachlässigbaren Bereich gefallen ist und kurz bevor der Bremsdruck 64 von 2 bar erneut auf 0 bar abfällt, erfährt der Beschleunigungssensor 4 eine positive Längsbeschleunigung. Hierdurch wird das Abbremsen des Anhängers 36 deutlich. Danach liegt der bezogene Beschleunigungsgradient 60.3 erneut bei ca. 0 s⁻¹ und weist nur minimale Auslenkungen auf, die einen vorbestimmten Schwellenwert 66.3, der kennzeichnend für einen Stillstand des Anhängers ist, unterschreiten. Ein Stillstand des Anhängers 36 ist somit erkennbar.

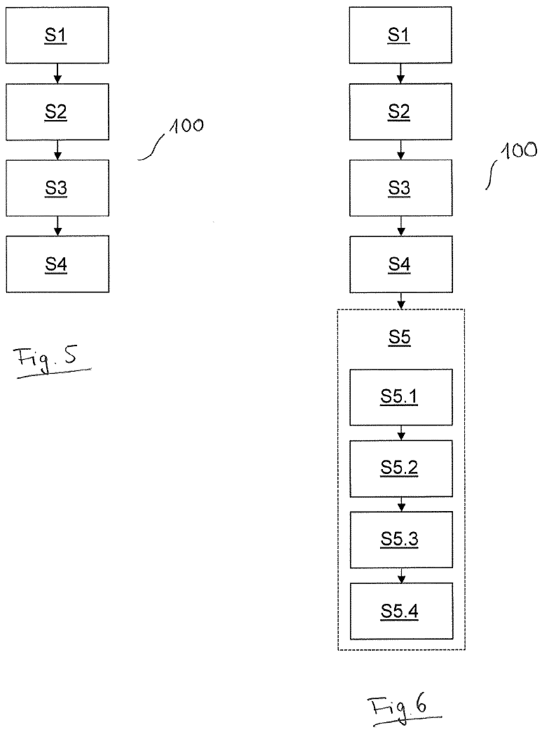

Fig. 5 zeigt ein schematisches Ablaufdiagramm für ein erstes bevorzugtes Ausführungsbeispiel eines Verfahrens 100. In einem ersten Schritt S1 wird mittels eines Beschleunigungssensors 4 die Beschleunigung wenigstens in einer ersten Richtungsachse des Anhängers 36 ermittelt. Hierfür muss der Beschleunigungssensor 4 so angeordnet sein, dass er die Beschleunigung des Anhängers 36 erfassen kann. Die erste Richtungsachse des Anhängers 36 kann dabei sowohl die x-Achse 54, die y-Achse 56 oder die z-Achse 58 des Anhängers 36 sein. Demnach wird wenigstens die Längsbeschleunigung, die Querbeschleunigung oder die Vertikalbeschleunigung des Anhängers 36 gemessen.

In einem zweiten Schritt S2 stellt der Beschleunigungssensor 4 ein Beschleunigungssignal SB an den Controller 6 bereit, das die erfasste Beschleunigung repräsentiert. In einem dritten Schritt S3, der folgt, nachdem der Controller 6 das Beschleunigungssignal SB empfangen hat, verarbeitet der Prozessor 8 des Controllers 6 das empfangene Signal. Der Prozessor 8 kann das Signal als Amplitudensignal und/oder als Frequenzspektrum mittels einer FFT verarbeiten und anschließend auswerten. In einem vierten Schritt S4 erkennt der Prozessor 8 dann den Stillstand des Anhängers 36 für den Fall, dass das dem Prozessor 8 bereitgestellte Beschleunigungssignal SB einen für einen Stillstand kennzeichnenden Schwellenwert 66.1-66.3 unterschreitet.

Fig. 6 zeigt ein schematisches Ablaufdiagramm für ein zweites bevorzugtes Ausführungsbeispiel des Verfahrens 100, das eine mögliche Weiterbildung des ersten Ausführungsbeispiels (vgl. Fig. 5) des Verfahrens 100 ist. Die Schritte S1 bis S4 entsprechen den Schritten S1 bis S4 des ersten Ausführungsbeispiels des Verfahrens 100. Der fünfte Schritt S5 bildet einen Verifizierungsschritt.

In einem ersten Unterschritt des Verifizierungsschritts S5.1 werden dem Controller 6 ein weiteres oder mehrere weitere Fahrzeugsignale SF, mittels derer ein Stillstand des Anhängers 36 erkennbar ist, bereitgestellt. Diese Fahrzeugsignale SF werden von Sensoren bereitgestellt, mit denen der Anhänger 36 standardmäßig ausgestattet ist. In einem zweiten Unterschritt des Verifizierungsschritts S5.2 verarbeitet der Prozessor 8 des Controllers 6 die bereitgestellten Fahrzeugsignale SF analog dem Beschleunigungssignal SB, um diese anschließend auswerten zu können. In einem dritten Unterschritt des Verifizierungsschritts S5.3 erkennt der Prozessor 8 bei Unterschreiten eines für das entsprechende Fahrzeugsignal SF vorbestimmten Schwellenwerts 66.1-66.3 den Stillstand des Fahrzeugs. In einem vierten Unterschritt des Verifizierungsschritts S5.4 ermittelt der Prozessor 8, ob der erkannte Stillstand aus Schritt S4 mit dem erkannten Stillstand aus Schritt S5.4 übereinstimmt und verifiziert bei Übereinstimmung so das Beschleunigungssignal SB.

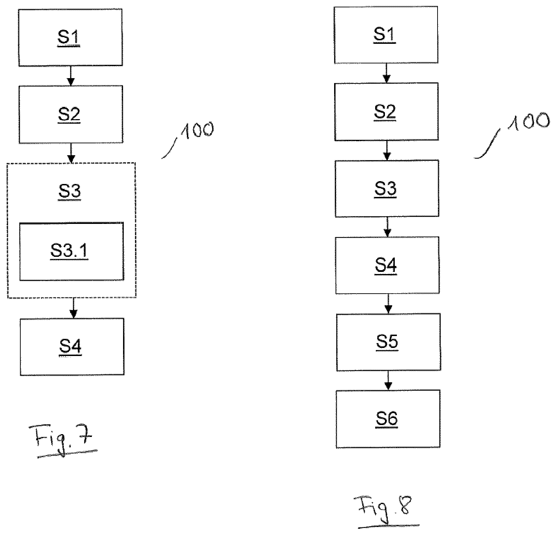

Fig. 7 zeigt ein schematisches Ablaufdiagramm für ein drittes bevorzugtes Ausführungsbeispiel des Verfahrens 100, das eine weitere mögliche Weiterbildung des ersten Ausführungsbeispiels des Verfahrens 100 ist. Schritte S1 und S2 entsprechen den Schritten S1 und S2 aus dem ersten bevorzugten Ausführungsbeispiel des Verfahrens 100 (Fig. 5) und insofern wird vollumfänglich auf die obige Beschreibung Bezug genommen. Der dritte Schritt S3 umfasst nun, neben dem Verarbeiten des Beschleunigungssignals SB, einen Unterschritt S3.1. In diesem Unterschritt S3.1 trainiert eine Lerneinheit 24 einen Filter für die Rauschunterdrückung und passt diesen an, vorzugsweise zyklisch. Die Lerneinheit 24 greift hierzu auf die vom Beschleunigungssensor 4 bereitgestellten Beschleunigungssignale SB zu und legt beruhend auf diesen Beschleunigungssignalen SB Gesetzmäßigkeiten fest, mittels derer möglichst genau Rauschsignalfrequenzanteile im Beschleunigungssignal SB vorhergesagt werden. Die Lerneinheit 24 trainiert mit diesem Wissen den Filter zur Rauschunterdrückung, sodass der Filter zielgenau Rauschsignale unterdrücken kann. Das Beschleunigungssignal SB kann dann ohne Rauschsignalfrequenzanteile ausgewertet werden. Der folgende Schritt 4 ist ebenfalls bereits in dem ersten bevorzugten Ausführungsbeispiel des Verfahrens 100 (Fig. 5) erläutert und insofern wird vollumfänglich auf die obige Beschreibung verwiesen. Es ist zudem möglich, dass sich der Verifizierungsschritt S5, welcher in dem mit Bezug auf Fig. 6 beschriebenen Ausführungsbeispiel beschrieben ist, an Schritt S4 anschließt.

Fig. 8 zeigt ein schematisches Ablaufdiagramm für ein viertes bevorzugtes Ausführungsbeispiel des Verfahrens 100, das eine Weiterbildung des zweiten bevorzugten Ausführungsbeispiels des Verfahrens 100 (Fig. 6) ist. Gleiche Schritte sind mit denselben Bezugszeichen versehen und insofern wird vollumfänglich auf die obige Beschreibung verwiesen. Dieses vierte bevorzugte Ausführungsbeispiel (Fig. 8) umfasst, neben den bereits bekannten Schritten S1-S5 einen sechsten Schritt S6. In Schritt S6 stellt der Controller 6 ein Fahrzeugstillstandsignal SFS an eine Bremsdrucksensorsteueruntereinheit 16 bereit, nachdem in Schritt S4 der Stillstand des Anhängers 36 basierend auf dem Beschleunigungssignal SB ermittelt wurde und in Schritt S5 die Stillstanderkennung verifiziert wurde. Es ist möglich, dass Schritt S5 lediglich optional ist. Die Bremsdrucksensorsteueruntereinheit 16 erhält so die Information, dass sich der Anhänger 36 im Stillstand befindet.

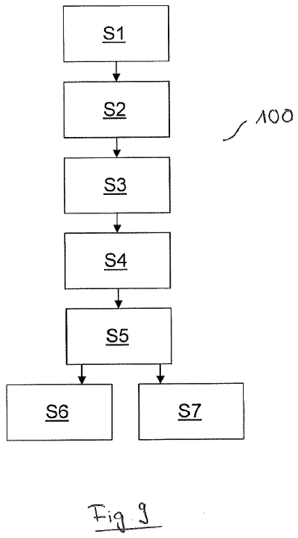

Fig. 9 zeigt ein schematisches Ablaufdiagramm für ein fünftes bevorzugtes Ausführungsbeispiel des Verfahrens 100, das eine Weiterbildung des vierten bevorzugten Ausführungsbeispiels des Verfahrens 100 ist, wobei Schritte S1-S6 in den vorherigen Ausführungsbeispielen des Verfahrens 100 bereits beschrieben sind. Insofern wird vollumfänglich auf die obige Beschreibung Bezug genommen. In diesem Ausführungsbespiel wird ein drahtloses Fahrzeugstillstandsignal SDFS in einem zum Schritt S6 parallelen Schritt S7 für die Anwendung von Telematikfunktionen bereitgestellt. Es ist auch möglich, dass Schritt S6 und S7 konsekutive Schritte sind.

Es sind zudem weitere bevorzugte Ausführungsbeispiele des Verfahrens 100 denkbar und bevorzugt, die sich aus einer Kombination der aufgeführten bevorzugten Ausführungsbeispiele des Verfahrens 100 ergeben. So kann beispielsweise der Unterschritt S3.1, welcher für das dritte bevorzugte Ausführungsbeispiel des Verfahrens beschrieben wurde, ebenfalls in allen weiteren bevorzugten Ausführungsbeispielen ausgeführt werden. Weiter könnte der Verifizierungsschritt S5 entfallen, bevor in Schritt S6 das Fahrzeugstillstandsignal SFS an die Bremsdrucksensorsteueruntereinheit 16 bereitgestellt wird.

### Bezugszeichenliste (Teil der Beschreibung)

- 1: Steuervorrichtung
- 2: Gehäuse
- 4: Beschleunigungssensor
- 6: Controller
- 8: Prozessor
- 10: Speicher
- 12: Platine
- 16: Bremsdrucksensorsteueruntereinheit
- 18: Übertragungsweg
- 20: Anschluss
- 22: Kupplungsmöglichkeit
- 24: Lerneinheit
- 26: Bremsdrucksensor
- 28.1-28.4: Fahrzeugsensoren
- 30.1-30.4: Bremszylinder
- 32: Anhängermodulator
- 34: Anhängermodulator-Steuereinheit
- 36: Anhänger
- 38: Rahmen
- 40.1-40.2: Vorderräder
- 42.1-42.2: Hinterräder
- 48: Anhängerbremssystem
- 50: drahtlose Schnittstelle
- 52: Anhängermodulatorschnittstelle
- 54: x-Achse
- 56: y-Achse
- 58: z-Achse
- 60.1-60.3: Beschleunigungsgradient
- 62: Radgeschwindigkeit
- 64: Bremsdruck
- 66.1-66.3: Schwellenwert
- 100: Verfahren
- AHA: Anhängerhinterachse
- AVA: Anhängervorderachse
- SB: Beschleunigungssignal
- SDFS: drahtloses Fahrzeugstillstandsignal
- SF: Fahrzeugsignal
- SFS: Fahrzeugstillstandsignal
- S1: Ermitteln einer Beschleunigung mittels des Beschleunigungssensors
- S2: Bereitstellen eines Beschleunigungssignals SB an den Controller
- S3: Verarbeiten des Beschleunigungssignal SB
- S3.1: Trainieren eines Filters
- S4: Erkennen eines Anhängerstillstands
- S5: Verifizierungsschritt
- S5.1: Bereitstellen eines Fahrzeugsignals
- S5.2: Verarbeiten des Fahrzeugsignals
- S5.3: Erkennen eines Anhängerstillstands
- S5.4: Ermitteln einer Übereinstimmung
- S6: Bereitstellen eines Fahrzeugstillstandsignals
- S7: Bereitstellen eines drahtlosen Fahrzeugstillstandsignals

## Patentansprüche

1. Steuervorrichtung (1) für ein Anhängerbremssystem (48) eines Anhängers (36) mit
einem Gehäuse (2), wobei in dem Gehäuse (2)
ein Beschleunigungssensor (4) zum Ermitteln einer Beschleunigung wenigstens in einer ersten Richtungsachse des Anhängers (36) und
ein Controller (6) angeordnet sind,
wobei der Beschleunigungssensor (4) ein Beschleunigungssignal (SB) an dem Controller (6) bereitstellt,
und wobei der Controller (6) einen Prozessor (8) aufweist, der dazu ausgebildet ist, einen Stillstand des Anhängers (36) basierend auf wenigstens dem Beschleunigungssignal (SB) der ersten Richtungsachse des Anhängers (36) zu erkennen.

2. Steuervorrichtung (1) nach Anspruch 1, wobei der Prozessor (8) dazu ausgebildet ist, das Beschleunigungssignal (SB) als Amplitudensignal zu verarbeiten.

3. Steuervorrichtung (1) nach Anspruch 1, wobei der Prozessor (8) dazu ausgebildet ist, das Beschleunigungssignal (SB) als Frequenzspektrum mittels einer Fast-Fourier-Transformation (FFT) zu verarbeiten.

4. Steuervorrichtung (1) nach einem der vorherigen Ansprüche, wobei der Prozessor (8) dazu ausgebildet ist, für den Fall, dass das Beschleunigungssignal (SB) einen für einen Stillstand kennzeichnenden, vorbestimmten Schwellenwert (66.1-66.3) unterschreitet, den Stillstand des Anhängers (36) zu erkennen.

5. Steuervorrichtung (1) nach einem der vorherigen Ansprüche, wobei der Controller (6) eine Platine (12) aufweist, auf welcher der Beschleunigungssensor (4) angeordnet ist.

6. Steuervorrichtung (1) nach einem der vorherigen Ansprüche, wobei das Gehäuse (2) dazu ausgebildet ist, an einem Gehäuseabschnitt an einem Rahmenabschnitt eines Rahmens (38) des Anhängers (36) kraft- und/oder formschlüssig befestigt zu werden.

7. Steuervorrichtung (1) nach einem der vorherigen Ansprüche, wobei der Beschleunigungssensor (4) ferner dazu ausgebildet ist, die Beschleunigung in einer zweiten und/oder in einer dritten Richtungsachse des Anhängers (36) zu ermitteln, die jeweils auf der ersten Richtungsachse und aufeinander orthogonal stehen.

8. Steuervorrichtung (1) nach Anspruch 7, wobei der Prozessor (8) dazu ausgebildet ist, den Stillstand des Anhängers (36) basierend auf dem Beschleunigungssignal (SB) der ersten, der zweiten und/oder der dritten Richtungsachse des Anhängers (36) zu erkennen.

9. Steuervorrichtung (1) nach einem der vorherigen Ansprüche, wobei der Controller (6) dazu ausgebildet ist, eines oder mehrere Fahrzeugsignale (SF) von einem oder mehreren weiteren Fahrzeugsensoren (28.1-28.4), mittels derer ein Stillstand des Anhängers erkennbar ist, zu empfangen.

10. Steuervorrichtung (1) nach Anspruch 9, wobei der Prozessor (8) dazu ausgebildet ist, die Fahrzeugsignale (SF) zu verarbeiten.

11. Steuervorrichtung (1) nach Anspruch 10, wobei der Prozessor (8) dazu ausgebildet ist, einen Verifizierungsschritt auszuführen, bei dem das Beschleunigungssignal (SB) basierend auf den Fahrzeugsignalen (SF) verifiziert wird.

12. Steuervorrichtung (1) nach einem der vorherigen Ansprüche, wobei der Prozessor (8) eine Lerneinheit (24) aufweist, die dazu ausgebildet ist, einen Filter für die Rauschunterdrückung im Beschleunigungssignal (SB) zu trainieren und anzupassen.

13. Steuervorrichtung (1) nach einem der vorherigen Ansprüche, wobei der Controller (6) dazu ausgebildet ist, ein Fahrzeugstillstandsignal (SFS) an eine Bremsdrucksensorsteueruntereinheit (16) bereitzustellen.

14. Steuervorrichtung (1) nach einem der vorherigen Ansprüche, wobei der Controller (6) dazu ausgebildet ist, das Fahrzeugstillstandsignal (SFS) an einen Anschluss (20) für ein Bussystem bereitzustellen.

15. Steuervorrichtung (1) nach einem der vorherigen Ansprüche, wobei der Controller (6) dazu ausgebildet ist, ein drahtloses Fahrzeugstillstandsignal (SDFS) für die Anwendung von Telematikfunktionen bereitzustellen.

16. Verfahren (100) zum Ermitteln eines Stillstands eines Anhängers (36) mit einer Steuervorrichtung (1) für ein Anhängerbremssystem (48) aufweisend ein Gehäuse (2), wobei in dem Gehäuse (2)
ein Beschleunigungssensor (4) und
ein Controller (6) mit einem Prozessor (8) angeordnet sind, wobei das Verfahren die Schritte aufweist:
- Ermitteln einer Beschleunigung wenigstens in einer ersten Richtungsachse des Anhängers (36) mittels des Beschleunigungssensors (4),
- Bereitstellen eines Beschleunigungssignals (SB) vom Beschleunigungssensor (4) an den Controller (6),
- Verarbeiten des Beschleunigungssignals (SB) im Prozessor (8) des Controllers (6) als Amplitudensignal und/oder als Frequenzspektrum mittels einer Fast-Fourier-Transformation (FFT),
- Erkennen eines Stillstands des Anhängers (36) basierend auf wenigstens dem Beschleunigungssignal (SB) der ersten Richtungsachse des Anhängers (36) mittels des Prozessors (8) für den Fall, dass das Beschleunigungssignal (SB) einen für einen Stillstand kennzeichnenden, vorbestimmten Schwellenwert (66.1-66.3) unterschreitet.

17. Verfahren (100) nach Anspruch 16, wobei das Beschleunigungssignal (SB) basierend auf einem oder mehreren Fahrzeugsignalen (SF) eines oder mehrerer weiterer Fahrzeugsensoren (28.1-28.4), mittels derer ein Stillstand des Anhängers erkennbar ist, verifiziert wird.

18. Verfahren (100) nach Anspruch 16 oder 17, ferner aufweisend:
- Trainieren und Anpassen eines Filters für die Rauschunterdrückung im Beschleunigungssignal (SB) mittels der Lerneinheit (24).

19. Verfahren (100) nach einem der Ansprüche 16-18, ferner aufweisend:
- Bereitstellen eines Fahrzeugstillstandsignals (SFS) an eine Bremsdrucksensorsteueruntereinheit (16) mittels des Controllers (6).

20. Verfahren (100) nach einem der Ansprüche 16-19, ferner aufweisend:
- Bereitstellen eines drahtlosen Fahrzeugstillstandsignals (SDFS) für die Anwendung von Telematikfunktionen mittels des Controllers (6).

21. Anhängerbremssystem (48) mit einer Steuervorrichtung (1) nach einem der Ansprüche 1 bis 15, wobei das Anhängerbremssystem (48) ferner einen oder mehrere Bremszylinder (30.1-30.4), wenigstens einen Bremsdrucksensor (26) und wenigstens einen Anhängermodulator (32) zum Steuern des Bremssystems (48) aufweist,
und wobei das Anhängerbremssystem (48) zum Ausführen des Verfahrens gemäß einem der Ansprüche 16-20 ausgebildet ist.

22. Anhänger (36), insbesondere Agraranhänger, mit einem Anhängerbremssystem (48) nach Anspruch 21, ferner aufweisend einen Rahmen (38), eine Kupplungsmöglichkeit (22), wenigstens eine Achse (AHA, AVA) und wenigstens zwei Räder (40.1-40.2, 42.1-42.2).
